# EUROPÄISCHE PATENTSCHRIFT

(11) **EP 1 810 954 B1**
(45) Veröffentlichungstag und Bekanntmachung des Hinweises auf die Patenterteilung: **16.02.2011**
(21) Anmeldenummer: 06025226.9
(22) Anmeldetag: 06.12.2006
(51) Int. Cl.: C03B 9/41

(54) **Glasmaschine zur Herstellung von Behälterglas**
Glass machine for the production of glass container
Machine à façonner le verre servant à la production de containeur en verre

(30) Priorität: 23.01.2006 DE 102006003330
(43) Veröffentlichungstag der Anmeldung: 25.07.2007
(73) Patentinhaber: Saint-Gobain Oberland AG, 88410 Bad Wurzach (DE)
(72) Erfinder: Moder, Hans-Johst, D-88410 Bad Wurzach-Haidgau (DE); Neubauer, Dietmar, D-88410 Bad Wurzach (DE); Zimmermann, Harald, D-88410 Bad Wurzach (DE); Harscher, Josef, D-88410 Bad Wurzach (DE)
(74) Vertreter: Lelgemann, Karl-Heinz

(56) Entgegenhaltungen:
- EP-A- 0 574 349
- GB-A- 2 149 910
- US-A- 4 104 046

## Beschreibung

Die Erfindung bezieht sich auf eine Glasmaschine zur Herstellung von Behälterglas nach dem Oberbegriff des Patentanspruchs 1.

Durch die Kühlluftbeaufschlagung der Vor- bzw. Fertigformwerkzeuge soll der Wärmeentzug realisiert werden, der für die Umformung des Glastropfens zum Behälterprodukt erforderlich ist.

Aus der US 4 104 046 ist eine Glasmaschine zur Herstellung von Behälterglas bekannt, mit Stationen, die jeweils Vor- bzw. Fertigformwerkzeuge aufweisen, einer Kühlvorrichtung, mittels der durch separate Kühlluftströme die Vor- bzw. Fertigformwerkzeuge einzeln oder gruppenweise kühlbar sind, und einer Thermokamera, mittels der Temperaturbilder der einzelnen Vor- bzw. Fertigformwerkzeuge erfassbar sind, die in einer Steuervorrichtung der Kühlvorrichtung in Regelgrößen zur Regelung der separaten Kühlluftströme umrechenbar sind. Hierbei werden Thermokameras eingesetzt, die in vorgegebenen Stellungen längs des Bewegungspfads der Vor- bzw. Fertigformwerkzeuge angeordnet sind.

Die GB 2 149 910 zeigt eine ähnliche Glasmaschine zur Herstellung von Behälterglas, bei der mittels einer Thermokamera die Temperaturverhältnisse an unterschiedlichen Formwerkzeugen erfasst werden können, wobei hierzu die Thermokamera um eine feste Achse drehbar ist, um sich auf die unterschiedlichen Formwerkzeuge auszurichten.

Der Erfindung liegt die Aufgabe zugrunde, die vorstehend geschilderte Glasmaschine zur Herstellung von Behälterglas derart weiterzubilden, dass die Temperaturverhältnisse an den Vor- bzw. Fertigformen mit einem geningern trebesehen Aufwand stabilisiert, vergleichmässigt und optimiert werden können.

Diese Aufgabe wird erfindungsgemäß durch die Merkmale in kennzeichzenden Teil des Patentanspruchs 1 gelöst.

Hierdurch ergeben sich mit einem vergleichsweise geringen technisch- konstruktiven Aufwand erheblich verlängerte Standzeiten der Vor- bzw. Fertigformwerkzeuge, eine gleichmäßigere Glasverteilung im hergestellten Glasartikel, eine verbesserte Prozessausbeute, eine erhebliche Reduzierung der erforderlichen Kühlluftmenge sowie der für den Produktionsprozess erforderlichen Energie und darüber hinaus eine verminderte Lärmentwicklung.

Vorteilhaft kann die Thermokamera als Infrarotkamera ausgebildet sein, die des weiteren zweckmäßigerweise mittels eines Linearantriebs längs der Glasmaschine hin und her bewegt werden kann. Hierdurch können die Temperaturbilder an allen Stationen der Glasmaschine in gleicher Weise exakt erfasst werden.

Gemäß einer weiteren vorteilhaften Ausführungsform der erfindungsgemäßen Glasmaschine sind in deren Steuervorrichtung Sollwerte für die Temperatur der einzelnen Vor- bzw. Fertigformwerkzeuge vorgebbar. Je nach Abweichungen der seitens der Thermokamera erfassten Temperaturbilder von diesen vorgegebenen Sollwerten erfolgt dann die Kühlluftbeaufschlagung des jeweiligen Vor- bzw. Fertigformwerkzeugs.

Bei einem erfindungsgemäßen Verfahren zur Regelung der Kühlung der Vor- bzw. Fertigformwerkzeuge einer Glasmaschine zur Herstellung von Behälterglas, bei dem die Vor- bzw. Fertigformwerkzeuge einzeln oder gruppenweise mit jeweils einem Kühlluftstrom gekühlt werden, wird eine Thermokamera vor- bzw. fertigformseitig längs der Glasmaschine bewegt, werden mittels der Thermokamera Temperaturbilder der einzelnen Vor- bzw. Fertigformwerkzeuge erstellt, und werden die Temperaturbilder der einzelnen Vor- bzw. Fertigformwerkzeuge in einer Steuervorrichtung der Glasmaschine zu Regelgrößen umgewandelt und zur Regelung der den einzelnen Vor- bzw. Fertigformwerkzeugen zugeordneten Kühlluftströme eingesetzt.

Vorteilhaft werden bei diesem Verfahren die in der Steuervorrichtung der Glasmaschine entsprechend den Temperaturbildern erstellten Regelgrößen mit Sollwerten der jeweiligen Vor- bzw. Fertigformwerkzeuge verglichen und die Kühlluftströme entsprechend den Abweichungen zwischen den Regelgrößen und den zugeordneten Sollwerten eingestellt.

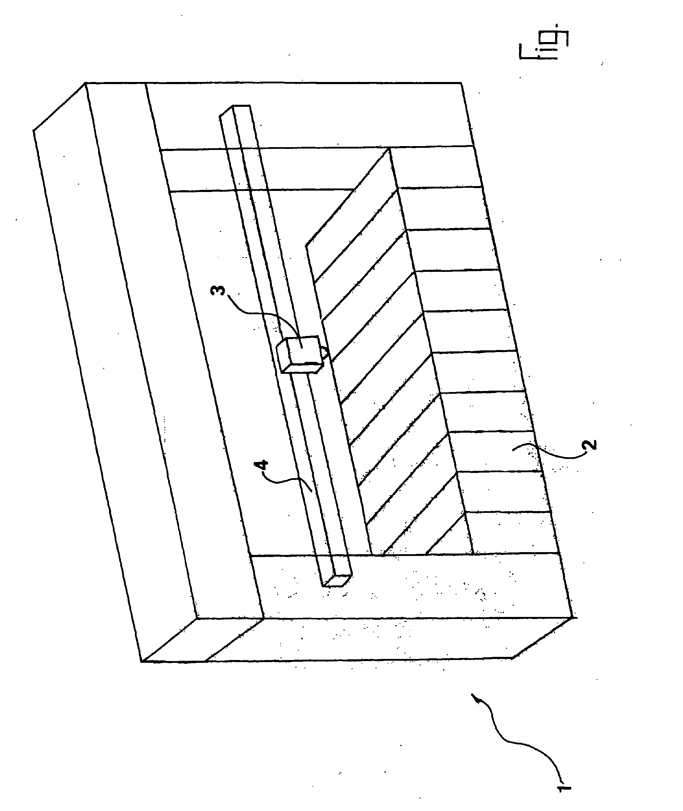

Im folgenden wird die Erfindung anhand einer Ausführungsform unter Bezugnahme auf die Zeichnung näher erläutert, in deren einziger Figur eine Ausführungsform einer erfindungsgemäßen Glasmaschine prinzipiell dargestellt ist.

Eine Glasmaschine 1, wie sie in der einzigen Figur gezeigt ist, dient der Herstellung von Behälterglas. In der Figur ist beispielhaft die Vorformseite der Glasmaschine 1 gezeigt. Zur Glasmaschine 1 gehört eine Vielzahl von Stationen 2, an denen metallische Vorformwerkzeuge vorgesehen sind. Diese Vorformwerkzeuge dienen im wesentlichen der Umformung des Glastropfens zu dem Behälterprodukt sowie zu dem dazu erforderlichen Wärmeentzug.

Hierzu weist die Glasmaschine 1 eine in der einzigen Figur nicht im einzelnen dargestellte Kühlvorrichtung auf. Die Kühlvorrichtung ist so gestaltet, dass mittels separater Kühlluftströme die Vorformwerkzeuge an den Stationen 2 der Glasmaschine 1 separat einzeln gekühlt werden. Grundsätzlich ist es auch möglich, mehrere Vorformwerkzeuge zu einer Gruppe von Vorformwerkzeugen zusammenzufassen und diese Gruppen von Vorformwerkzeugen separat zu kühlen.

Obwohl die Glasmaschine 1 bzw. deren Kühlvorrichtung im dargestellten Ausführungsbeispiel in Verbindung mit Vorformwerkzeugen näher beschrieben wird, ist klar, dass auch die Fertigformwerkzeuge einer derartigen Glasmaschine 1 in gleicher Weise gekühlt werden können.

Die in der einzigen Figur gezeigte Glasmaschine 1 ist mit einer Infrarotkamera 3 ausgerüstet, die längs der Glasmaschine 1 bzw. längs der Anordnung der Stationen 2 der Glasmaschine 1 hin und her bewegbar ist. Die Infrarotkamera 3 wird im dargestellten Ausführungsbeispiel der Glasmaschine 1 mittels eines geeigneten Linearantriebs 4 verstellt.

Bei ihrer Bewegung längs der die Vorformwerkzeuge aufweisenden Stationen 2 der Glasmaschine 1 erfasst die Infrarotkamera 3 Temperaturbilder der an den Stationen 2 vorgesehenen Vorformwerkzeuge. Diesen Temperaturbildern entsprechende Daten werden an eine in der Figur nicht explizit gezeigte Steuervorrichtung der Glasmaschine 1 weitergeleitet, wo sie zu Regelgrößen umgewandelt werden. Entsprechend den derart ermittelten Regelgrößen wird die Kühlvorrichtung der Glasmaschine 1 so gesteuert, dass die einzelnen Vorformwerkzeuge mit einem Kühlluftstrom beaufschlagt werden, der exakt entsprechend den mittels der Temperaturbilder übermittelten Daten des jeweiligen Vorformwerkzeugs entspricht. Es findet somit eine individuelle Steuerung bzw. Regelung jedes einem Vorformwerkzeug zugeordneten Kühlluftstroms statt. In der in der Figur nicht gezeigten Steuervorrichtung der Glasmaschine sind Sollwerte für die Temperatur der einzelnen Vorformwerkzeuge gespeichert. Die Steuerung bzw. Regelung der einzelnen Kühlluftströme geschieht dann in Abhängigkeit von den Abweichungen der Temperaturbilder der einzelnen Vorformwerkzeuge von den vorgegebenen Sollwerten.

Wie bereits erwähnt, ist die Steuerung bzw. Regelung der einzelnen separaten Kühlluftströme auch für die Fertigformwerkzeuge einer derartigen Glasmaschine 1 möglich.

## Patentansprüche

1. Glasmaschine zur Herstellung von Behälterglas, mit Stationen (2), die jeweils Vor- bzw. Fertigformwerkzeuge aufweisen, einer Kühlvorrichtung, mittels der durch separate Kühlluftströme die Vor- bzw. Fertigformwerkzeuge einzeln oder gruppenweise kühlbar sind, und einer Thermokamera (3), mittels der Temperaturbilder der einzelnen Vor- bzw. Fertigformwerkzeuge erfassbar sind, die in einer Steuervorrichtung der Kühlvorrichtung in Regelgrößen zur Regelung der separaten Kühlluftströme umrechenbar sind, **dadurch gekennzeichnet, dass** die Thermokamera (3) vor- bzw. fertigformseitig längs der Glasmaschine (1) bewegbar ist.

2. Glasmaschine nach Anspruch 1, deren Thermokamera (3) als Infrarotkamera ausgebildet ist.

3. Glasmaschine nach Anspruch 1 oder 2, mit einem Linearantrieb (4), mittels dem die Thermokamera (3) längs der Glasmaschine (1) hin und her bewegbar ist.

4. Glasmaschine nach einem der Ansprüche 1 bis 3, in deren Steuervorrichtung Sollwerte für die Temperatur der einzelnen Vor- bzw. Fertigformwerkzeuge vorgebbar sind.

5. Verfahren zur Regelung der Kühlung der Vor- bzw. Fertigformwerkzeuge einer Glasmaschine (1) zur Herstellung von Behälterglas, bei dem die Vor- bzw. Fertigformwerkzeuge einzeln oder gruppenweise mit jeweils einem Kühlluftstrom gekühlt werden, mittels einer Thermokamera (3) Temperaturbilder der einzelnen Vor- bzw. Fertigformwerkzeuge erstellt werden, und die Temperaturbilder der einzelnen Vor- bzw. Fertigformwerkzeuge in einer Steuervorrichtung der Glasmaschine (1) zu Regelgrößen umgewandelt und zur Regelung der den einzelnen Vor- bzw. Fertigformwerkzeugen zugeordneten Kühlluftströme eingesetzt werden, **dadurch gekennzeichnet, dass** die Thermokamera (3) vor - bzw. fertigformseitig längs der Glasmaschine (1) bewegt wird.

6. Verfahren nach Anspruch 5, bei dem die in der Steuervorrichtung der Glasmaschine (1) entsprechend den Temperaturbildern erstellten Regelgrößen mit Sollwerten der jeweiligen Vor- bzw. Fertigformwerkzeuge verglichen und die Kühlluftströme entsprechend den Abweichungen zwischen den Regelgrößen und den zugeordneten Sollwerten eingestellt werden.

## Claims

1. A glass machine for manufacturing container glass, comprising stations (2), each of them having preforming molds and finishing molds, a cooling device by means of which the preforming molds and finishing molds can be cooled individually or in groups by separate cooling air streams, and a thermal camera (3) by means of which temperature images of the individual preforming molds and finishing molds can be captured, which images can be converted in a control device into control variables for controlling the separate cooling air streams, **characterized in that** the thermal camera (3) can be moved on the preforming mold side and finishing mold side along the glass machine (1).

2. The glass machine according to claim 1, the thermal camera (3) of which is configured as infrared camera.

3. The glass machine according to claim 1 or claim 2, comprising a linear drive (4) by means of which the thermal camera (3) can be moved back and forth along the glass machine (1).

4. The glass machine according to any one of the claims 1 to 3, in the control device of which, target values for the temperature of the individual preforming molds and finishing molds can be specified.

5. A method for controlling the cooling of the preforming molds and finishing molds of a glass machine (1) for manufacturing container glass, in which each of the preforming molds and finishing molds are cooled, individually or in groups, with one cooling air stream, in which by means of a thermal camera (3), temperature images of the individual preforming molds and finishing molds are created and the temperature images of the individual preforming molds and finishing molds are converted in a control device of the glass machine (1) into control variables and are used for controlling the cooling air streams allocated to the individual preforming molds and finishing molds, **characterized in that** the thermal camera (3) is moved on the preforming mold side and finishing mold side along the glass machine (1).

6. The method according to claim 5, in which the control variables created in the control device of the glass machine (1) corresponding to the temperature images are compared with target values of the respective preforming molds and finishing molds, and the cooling air streams are adjusted corresponding to the deviations between the control variables and the allocated target values.

## Revendications

1. Machine à verre pour fabriquer du verre d'emballage, comprenant des stations (2) qui présentent respectivement des outils de prémoulage et de moulage final, un dispositif de refroidissement au moyen duquel les outils de prémoulage et de moulage final peuvent être refroidis individuellement ou en groupes par des courants d'air de refroidissement séparés, et une caméra thermique (3) au moyen de laquelle des images de température des différents outils de prémoulage et de moulage final peuvent être saisies, qui peuvent être converties en grandeurs de réglage dans un dispositif de commande du dispositif de refroidissement pour régler les courants d'air de refroidissement séparé, **caractérisée en ce que** la caméra thermique (3) est mobile le long de la machine à verre (1) côté pré-moulage respectivement côté moulage final.

2. Machine à verre selon la revendication 1, dont la caméra thermique (3) est une caméra infrarouges.

3. Machine à verre selon la revendication 1 ou 2, comprenant un entraînement linéaire (4) au moyen duquel la caméra thermique (3) est mobile d'avant en arrière le long de la machine à verre (1).

4. Machine à verre selon l'une des revendications 1 à 3, dans le dispositif de commande de laquelle des valeurs de consigne peuvent être prédéfinies pour la température des différents outils de prémoulage et de moulage final.

5. Procédé de réglage du refroidissement des outils de prémoulage et de moulage final d'une machine à verre (1) pour fabriquer du verre d'emballage, dans lequel
les outils de prémoulage et de moulage final sont refroidis individuellement ou en groupes par un courant d'air de refroidissement respectif, des images de température des outils de prémoulage et de moulage final sont saisies au moyen d'une caméra thermique (3) et les images de température des outils de prémoulage et de moulage final sont converties en grandeurs de réglage dans un dispositif de commande de la machine à verre (1) et pour régler les courants d'air de refroidissement attribués aux différents outils de prémoulage et de moulage final, **caractérisé en ce que** la caméra thermique (3) est mobile le long de la machine à verre (1) côté pré-moulage respectivement côté moulage final.

6. Procédé selon la revendication 5, dans lequel les grandeurs de réglage établies dans le dispositif de commande de la machine à verre (1) conformément aux images de température sont comparées à des valeurs de consigne des outils de prémoulage et de moulage final respectifs et les courants d'air de refroidissement sont ajustés en fonction des écarts entre les grandeurs de réglage et les valeurs de consigne attribuées.
